# EUROPÄISCHE PATENTSCHRIFT

(11) **EP 3 668 681 B1**
(45) Veröffentlichungstag und Bekanntmachung des Hinweises auf die Patenterteilung: **03.11.2021**
(21) Anmeldenummer: 18735255.4
(22) Anmeldetag: 27.06.2018
(51) Int. Cl.: B23P 9/02, C21D 7/08, B24B 39/02, C21D 9/08

(54) **VERFAHREN ZUM BETREIBEN EINER WERKZEUGVORRICHTUNG ZUM ROLLIEREN EINER BAUTEIL-BOHRUNG**
METHOD FOR OPERATING A TOOL DEVICE FOR ROLLING A COMPONENT BORE
PROCÉDÉ DE FONCTIONNEMENT D'UN DISPOSITIF D'OUTIL POUR LE ROULAGE D'UN TROU D'UNE PIÈCE

(30) Priorität: 15.08.2017 DE 102017214169
(43) Veröffentlichungstag der Anmeldung: 24.06.2020
(73) Patentinhaber: Robert Bosch GmbH, 70442 Stuttgart (DE)
(72) Erfinder: FLEISCHMANN, Georg, 91362 Pretzfeld (DE); GOELLER, Josef, 96129 Strullendorf (DE); BENTELE, Peter, 70184 Stuttgart (DE); BLECHINGER, Peter, 96164 Kemmern (DE); REHHAHN, Torsten, 70806 Kornwestheim (DE); FORMANN, Karl-Heinz, 96120 Bischberg (DE); GLOSSNER, Sebastian, 96047 Bamberg (DE); MOLINSKI, Wolfgang, 96049 Bamberg (DE); HASSEL, Werner, 95359 Kasendorf (DE)
(86) Internationale Anmeldenummer: PCT/EP2018/067206
(87) Internationale Veröffentlichungsnummer: WO 2019/034314

(56) Entgegenhaltungen:
- WO-A1-2012/107028
- DE-A1- 2 311 476
- DE-B3-102016 002 119
- GB-A- 934 075
- US-A- 3 911 707
- US-A- 5 233 738
- US-A1- 2013 213 106
- DATABASE WPI Week 198034 Thomson Scientific, London, GB; AN 1980-H3332C XP002784462, -& SU 707 786 A (ODESS FOOD IND TECH) 5. Januar 1980 (1980-01-05)

## Beschreibung

Die Erfindung betrifft ein Verfahren zum Betreiben einer Werkzeugvorrichtung zum Rollieren einer Bauteil-Bohrung, wobei die Werkzeugvorrichtung einen Schaft zur Kopplung an einen Drehantrieb einer Werkzeugmaschine und eine Lanze aufweist, welche wenigstens einen Rollierkörper aufweist, und wobei die Lanze an ihrem Außenumfang eine Vielzahl von Kugeln als Rollierkörper aufweist, welche in axialer Erstreckung und in Umfangsrichtung der Lanze verteilt angeordnet sind.

### Stand der Technik

Ein solches Verfahren ist aus der WO 2012/107028 A1 bekannt.

Derartige Werkzeugvorrichtungen werden typischerweise eingesetzt, um die Innenwandungen von Bauteil-Bohrungen durch Rollieren zu komprimieren und mithin zu verfestigen, indem durch Rollierkörper der Werkzeugvorrichtung Druckeigenspannungen in zu bearbeitende Bauteile bzw. Werkstücke eingebracht werden. Insbesondere bei Bauteilen bzw. Komponenten, die hohen Belastungen bzw. Beanspruchungen ausgesetzt sind, wie z.B. bei Haltekörpern von Kraftstoff-Injektoren in Hochdruckspeichereinspritzsystemen mit im Betrieb auftretenden Drücken bis zu 3000 bar, ist durch Rollieren eine Steigerung der Oberflächengüte erzielbar, so dass ein Bauteil oder Werkstück einer solchermaßen strukturverfestigten Innenbohrung im späteren Betrieb höheren Belastungen standhalten kann. Üblicherweise sind jedoch mit einem derartigen Rollierverfahren relativ lange Taktzeiten für die Stückfertigung erforderlich.

### Offenbarung

### Vorteile der Erfindung

Das erfindungsgemäße Verfahren ist im Anspruch 1 angegeben. Es umfasst die Verfahrensschritte des schnellen Eintauchens der Lanze in die Bohrung bis zu einer vorbestimmten ersten Axialposition, die in Eintauchrichtung vor einem unteren Ende eines zur Bearbeitung vorgesehenen Bohrungsabschnitts liegt, wobei das Eintauchen rotationslos und mit im Außenumfang der Lanze versenkten Rollierkugeln erfolgt, des Durchfahrens eines zwischen der vorbestimmten ersten Axialposition und dem unteren Ende des zur Bearbeitung vorgesehenen Bohrungsabschnitts verbleibenden Axialwegs, wobei während des Durchfahrens die anfangs rotationslose Lanze auf eine vorbestimmte Drehzahl in Rotation versetzt wird und zugleich die Rollierkugeln der Lanze in ihre Rollierstellung radial ausgelenkt werden, des rollierenden Zurückfahrens der Lanze entgegen der Eintauchrichtung von dem eine Startrollierposition definierenden unteren Ende des Bohrungsabschnitts bis zu seinem eine Endrollierposition definierenden oberen Ende, wobei die zuvor beim Durchfahren erreichte Drehzahl der Lanze etwa beibehalten wird und die Rollierkugeln in ihrer Rollierstellung radial ausgelenkt bleiben, und des schnellen Herausführens der Lanze aus der Bohrung, wobei die Lanze rotationslos gestellt wird und deren Rollierkugeln im Außenumfang der Lanze versenkt werden. Dadurch ist es möglich, bei hoher Fertigungsqualität zugleich einen Taktzeitgewinn pro gefertigtem Bauteil bzw. Werkstück zu erzielen, denn im Unterschied zum Stand der Technik, bei dem üblicherweise ein Dorn mit einem Kugelpaar rein translatorisch in ein in Rotation versetztes Bauteil ein- und ausfährt, so dass für die per se zeitbeanspruchende Rollierbearbeitung insgesamt zwei Wege erforderlich sind, ist gemäß dem angegebenen Verfahren für den eigentlichen Rollierverfahrensschritt effektiv lediglich ein Weg erforderlich, da erst kurz vor Beginn des eigentlichen Rollierverfahrensschritts der bis dahin translatorischen Bewegung der Lanze eine Rotationskomponente kontrolliert für die Dauer des Rolliervorgangs zugeschaltet und zudem das angegebene Verfahren in den zentralen Schritten unter Kontrolle relevanter Prozessparameter ausgeführt wird.

Vorteilhafte Varianten des Verfahrens sind in den abhängigen Ansprüchen angegeben.

Um im automatisierten Verfahrensbetrieb die Fertigungsqualität reproduzierbar sicherzustellen, hat es sich als zweckmäßig erwiesen, wenn für den Schritt des Durchfahrens eine Rampenfunktion definiert wird, durch die ein zeitlich kontinuierlich zunehmender Verlauf zumindest für den Kühlmitteldruck im Kühlmittelkanal der Werkzeugvorrichtung und die an der Lanze eingestellte Drehzahl als Prozessparameter vorgegeben wird.

Eine noch stärkere Prozesskontrolle ist erzielbar, wenn ein Kühlmitteldurchfluss und/oder eine auf die Lanze einwirkende Vorschubkraft als weitere(r) Prozessparameter vorgesehen wird/werden, für den/die eine Rampenfunktion definiert wird, und indem in dem Verfahrensschritt des rollierenden Zurückfahrens die Prozessparameter laufend gemessen und überwacht werden. Durch die Prozesskontrolle kann vorteilhaft das Verfahren abhängig von an einen Bauteil-Typ zu stellende Festigkeitsanforderungen variiert werden. Zudem sind potenziell qualitätsmindernde Störeinflüsse sofort erkennbar. Und schließlich werden durch die Prozesskontrolle reproduzierbare Verfahrensrandbedingungen zum definierten Einbringen von Druckeigenspannungen sichergestellt.

Indem die radiale Auslenkung und Versenkung der Rollierkugeln der Lanze durch Steuern des Kühlmitteldrucks und/oder Kühlmitteldurchflusses im Kühlmittelzuleitungskanal der Werkzeugvorrichtung bewirkt wird, ist es möglich, die Rollierfunktion der Lanze selektiv nur in einem ausgewählten Verfahrensschritt einzusetzen.

Als zweckmäßig hat sich erwiesen, wenn die für den initialisierenden Verfahrensschritt vorbestimmte erste Axialposition in der Größenordnung von Millimetern, vorzugsweise 3.5 mm, in Eintauchrichtung vor der Startrollierposition liegt, um für die Dauer des noch verbleibenden Verfahrweges bis zur Startrollierposition ein Zeitfenster zur Realisierung der Rampenfunktion bereitzustellen.

Indem bei Erreichen eines Gipfelpunktes der Rampenfunktion an der Startrollierposition die Translationsrichtung der Lanze instantan reversiert wird, wird durch die bei Erreichen vorbestimmter Werte für die relevanten Prozessparameter abrupt initiierte Bewegungsumkehr an dieser Position vermieden, dass sich eine möglicherweise strukturschwächende Einkerbung in der Innenwand der Bohrung ausbilden kann; stattdessen bildet sich dort lediglich eine schwach sichtbare Einlaufrille aus, die den Beginn des bei der Bearbeitung erzeugten und mithin strukturverfestigten Innenwandbereichs der Bohrung markiert.

Das erfindungsgemäße Verfahren ist bei hoher Fertigungsqualität auch zum Rollieren von Stufenbohrungen beispielsweise in Injektor-Haltekörpern geeignet, wobei ein Taktzeitgewinn erzielbar ist, der von der Anzahl der verwendeten Rollierkörper und dem damit verbundenen reduzierten Verfahrweg im Arbeitsgang sowie der Ausprägung der Rampenfunktion abhängt, was beim Einsatz des Verfahrens in einer Fertigungslinie insgesamt zu einem höheren Massendurchsatz bei gleichzeitig deutlich niedrigen Produktionskosten führt.

### Kurze Beschreibung der Zeichnungen

Ausführungsbeispiele der Erfindung sind in der nachfolgenden Beschreibung und in den beigefügten Zeichnungen näher erläutert. Letztere zeigen in schematisch gehaltenen Ansichten:
Fig. 1 eine perspektivische Ansicht einer Werkzeugvorrichtung, die nicht Teil der beanspruchten Erfindung ist, mit einem Schaft und einer sich von dem Schaft längsaxial wegerstreckenden Lanze, wobei am Außenumfang der Lanze insgesamt vierzehn Kugeln als Rollierkörper paarweise angeordnet sind,
Fig. 2 eine perspektivische Ansicht der Lanze der Werkzeugvorrichtung von Fig. 1, wobei die Lanze in eine Bohrung eines in Längsschnittansicht dargestellten Injektors eingetaucht ist,
Fig. 3 eine perspektivische Ansicht der Werkzeugvorrichtung gemäß einer zweiten Ausführungsform mit am Außenumfang der Lanze angeordneten sechs Kugelpaaren,
Fig. 4 ein Flussdiagramm mit wesentlichen Verfahrensschritten des erfindungsgemäßen Verfahrens, und
Fig. 5 ein Oszillogramm mit aufgezeichneten Signalverläufen von Prozessparametern zugeordneten Signalen.

### Beschreibung der Ausführungsformen

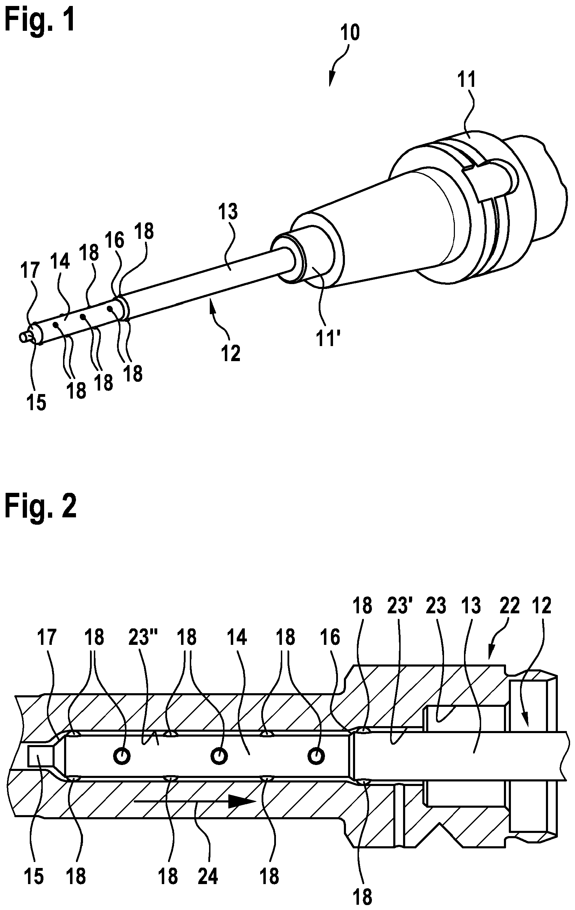

Fig. 1 zeigt in einer perspektivischen Ansicht eine im Ganzen mit 10 bezeichnete Werkzeugvorrichtung , die nicht Teil der beanspruchten Erfindung ist, gemäß einer ersten Ausführungsform, die zum Rollieren einer Stufenbohrung in einem Bauteil bzw. Werkstück dient und dazu im Wesentlichen einen Schaft 11 zum Ankoppeln an einen Drehantrieb (nicht dargestellt) und eine sich von einem verjüngten Schaftbereich 11' wegerstreckende Lanze 12 umfasst, welche gegenüber dem Schaft 11 und dessen Schaftbereich 11' durchmesserkleiner ausgebildet ist. Um eine Stufenbohrung in einem Arbeitsgang bearbeiten zu können, ist die Lanze 12 in verschiedene Abschnitte unterteilt und weist einen an den verjüngten Schaftbereich 11' angrenzenden hinteren Lanzenabschnitt 13, einen vorderen Lanzenabschnitt 14 und am freien Ende eine Lanzenspitze 15 auf, wobei der vordere Lanzenabschnitt 14 durchmesserkleiner als der hintere Lanzenabschnitt 13 ist und zwischen den beiden Lanzenabschnitten 13, 14 ein kurzer konusförmiger Übergangsbereich 16 verläuft. Der vordere Lanzenabschnitt 14 und der hintere Lanzenabschnitt 13 sowie die Lanzenspitze 15 sind im Wesentlichen zylinderförmig ausgebildet, wobei der vordere Lanzenabschnitt 14 in der durchmesserkleineren Lanzenspitze 15 endet und zwischen dem vorderen Lanzenabschnitt 14 und der Lanzenspitze 15 ein konusförmiger Übergangsbereich 17 verläuft.

Am Außenumfang der Lanze 12 sind Kugeln 18 als Rollierkörper angeordnet, die in - nicht dargestellten - Vertiefungen in der Außenmantelfläche der Lanze 12 aufgenommen sind. Die Kugeln 18 sind so angeordnet, dass jeweils zwei einander paarweise zugeordnete Kugeln bei etwa gleicher Axiallage am Außenumfang der Lanze 12 diametral einander gegenüberliegen. Eine Vielzahl von Kugelpaaren ist in axialer Richtung der Werkzeugvorrichtung 10 in regelmäßigen Axialabständen voneinander im vorderen Lanzenabschnitt 14 angeordnet, wobei das vorderste Kugelpaar dicht am konusförmigen Übergangsbereich 17 angeordnet ist, während am durchmessergrößeren Lanzenabschnitt 13 lediglich ein einzelnes Kugelpaar und zwar in der Nähe des konusförmigen Übergangsbereichs 16 vorgesehen ist. Von den Vertiefungen, in denen die Kugeln aufgenommen sind, laufen in der Lanze 12 jeweils Druckmittelpfade (nicht dargestellt) radial nach innen und münden jeweils in eine zentrale Druckmittelzuleitung (nicht dargestellt), welche sich koaxial zur Längsmittelachse 20 durch den Schaft 11 bis in den vorderen Lanzenabschnitt 14 erstreckt und zum Anschluss an eine externe Kühlmittelquelle vorgesehen ist. Herrscht nun ein ausreichender Druck durch das Kühlmittel in dem Kühlmittelkanal und den davon zu den Taschen abzweigenden Strömungspfaden, so sind die Rollierkugeln 18 aufgrund des hydraulisch auf ihnen lastenden Drucks in ihre Rollierstellung aus ihren zugehörigen Taschen radial ausgefahren bzw. ausgestellt, wobei die Rollierkugeln 18 einen bestimmten Überstand gegenüber der Außenmantelfläche der entsprechenden Lanzenabschnitt 13, 14 aufweisen; ist hingegen der im Kühlmittelkanal und den davon abzweigenden Strömungspfaden eingestellte Druck unterhalb eines ausreichenden Druckniveaus, so verbleiben die Rollierkugeln 18 in ihren zugehörigen Taschen versenkt und stehen dementsprechend nicht über die Außenmantelfläche des entsprechenden Lanzenabschnitts hervor. Durch die Kühlmittelzufuhr zum Kühlmittelkanal der Werkzeugvorrichtung 10 sind somit die Radialbewegung der Rollierkugeln 18 und deren Rollierfunktion steuerbar.

Fig. 2 zeigt in einer Längsschnittansicht einen Injektor-Haltekörper 22 als zu bearbeitendes Bauteil und eine perspektivisch dargestellte Lanze 12 der Werkzeugvorrichtung 10 von Fig. 1, wobei die Lanze 12 in eine Stufenbohrung 23 des Injektor-Haltekörpers 22 eingetaucht ist, um die Innenwand der Stufenbohrung 23 zu rollieren bzw. zu verfestigen. Dazu ist die Lanze 12 soweit in die Stufenbohrung 23 eingetaucht, dass der hintere Lanzenabschnitt 13 in den durchmessergrößeren Bereich der Stufenbohrung 23 hineinragt und sich der vorgeordnete konusförmige Übergangsabschnitt 16 mit dahinter angeordnetem Kugelpaar in Höhe des Stufenabsatzes 23' der Stufenbohrung befindet, während der vordere Lanzenabschnitt 14, an dem die Vielzahl von Kugelpaaren angeordnet ist, den dem Stufenabsatz 23' vorgeordneten durchmesserkleineren Bereich der Stufenbohrung 23' durchdringt. Der Rolliervorgang erfolgt in Richtung des Pfeils 24, d.h. in der zur Eintauchrichtung reversen bzw. entgegengesetzten Bewegungsrichtung der Lanze 12, wobei die Kugelpaare des vorderen Lanzenabschnitts 14 den durchmesserkleineren Bereich der Stufenbohrung 23 vor dem Stufenabsatz 23' und das einzelne Kugelpaar des hinteren Lanzenabschnitts 13 den durchmessergrößeren Bereich der Stufenbohrung 23 hinter dem Stufenabsatz 23' während der reversen Bewegung entlang des Pfeils 24 rollierend bearbeiten bzw. bearbeitet.

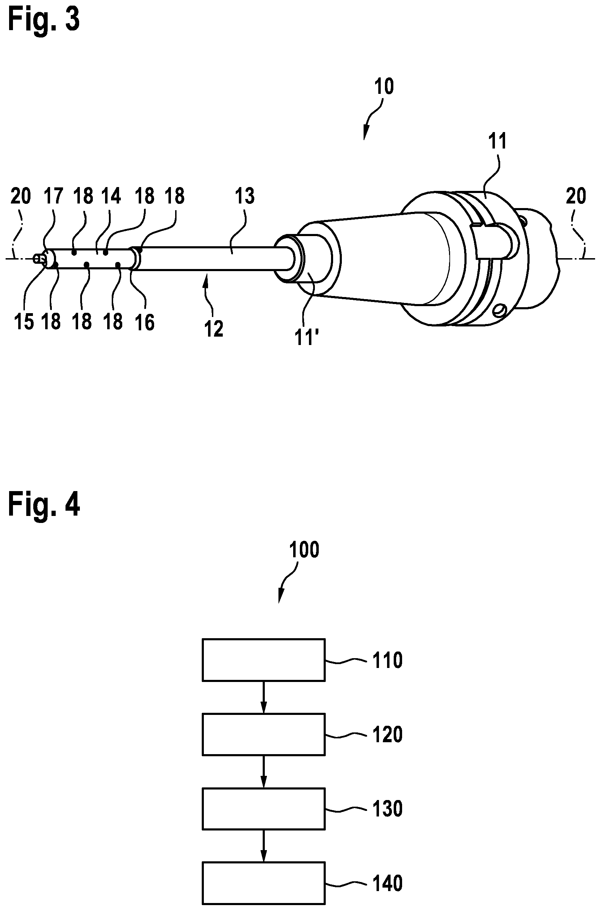

Fig. 3 zeigt in einer stark schematisch gehaltenen Perspektivansicht die Werkzeugvorrichtung 10 gemäß einer abgewandelten Ausführungsform, die sich von der in Fig. 1 und 2 dargestellten Ausführungsform darin unterscheidet, dass die in Fig. 3 veranschaulichte Ausführungsform lediglich sechs Kugelpaare aufweist, wobei 5 Kugelpaare im vorderen Lanzenabschnitt 14 angeordnet sind, während der hintere Lanzenabschnitt 13 ein einziges Kugelpaar nahe am konusförmigen Übergangsbereich 16 zum vorderen Lanzenabschnitt 14 aufweist. Aufgrund der geringeren Anzahl von Kugelpaaren im Vergleich zu der in Fig. 1 und 2 dargestellten Ausführungsform ist die Ausführungsvariante gemäß Fig. 3 kostengünstiger herstellbar. Die in Fig. 3 gezeigte Werkzeugvorrichtung ist nicht Teil der beanspruchten Erfindung.

Fig. 4 zeigt ein Flussdiagramm 100 mit den wesentlichen Verfahrensschritten eines Verfahrens zum Rollieren von Bauteil-Bohrungen, insbesondere von Stufenbohrungen in Injektor-Haltekörpern. In einem ersten Verfahrensschritt 110 wird die Lanze 12 der Werkzeugvorrichtung 10 in die Bohrung des Bauteils entlang der Längsachse der Bohrung bis zu einer vorbestimmten Axialposition, welche in Eintauchrichtung etliche Millimeter, vorzugsweise 3.5 mm, vor dem Bohrungsende des zur Bearbeitung vorgesehenen Bohrungsabschnitts liegt, schnell eingetaucht, wobei das Eintauchen ohne Rotation der Lanze 12 und ohne Kühlmittelzufuhr für den Kühlmittelzufuhrkanal der Lanze 12 erfolgt, so dass die Kugeln 18 in ihren Aufnahmetaschen bleiben, d.h. in diesem Zustand noch keine Rollierwirkung entfalten. In einem daran anschließenden Verfahrensschritt 120 wird der in Eintauchrichtung noch verbleibende Axialweg bis zu einer Startrollierposition am Ende des zur Bearbeitung vorgesehenen Bohrungsabschnitts mit der Lanze 12 durchfahren, indem während des Durchfahrens die Lanze 12 mittels einer vordefinierten Rampe auf eine vorbestimmte Drehzahl beschleunigt wird und ein Kühlmitteldruck zum Kühlmittelzufuhrkanal der Lanze aufgebaut wird und beim Erreichen der Startrollierposition am Ende der Axialwegstrecke die vorbestimmte Drehzahl der Rotation und der vorbestimmte Kühlmitteldruck erreicht wird. Dabei besteht die Funktion der Rampe darin, einen linearen Anstiegsgradienten für den Drehzahlverlauf, den Druckverlauf und für weitere Prozessparameter wie den Kühlmitteldurchfluss und die auf die Lanze 12 einwirkende Vorschubkraft für die Dauer des zweiten Verfahrensschritts 120 festzulegen. In einem weiteren Verfahrensschritt 130 wird die Vorschubrichtung reversiert und die Lanze 12 von der Startrollierposition bis zur Endrollierposition entgegen der Eintauchrichtung zurückgefahren, während gleichzeitig die Drehzahl der Rotation, der Kühlmitteldruck, der Kühlmitteldurchfluss und die Vorschubkraft konstant gehalten und durch laufende Messungen überwacht werden, um die Innenwand der Bohrung in diesem Weglängenabschnitt, d.h. zwischen Startrollierposition und Endrollierposition, hydrostatisch zu rollieren bzw. verfestigen. Der Rolliervorgang gemäß Verfahrensschritt 130 erfolgt somit unter prozessüberwachten Randbedingungen, die dazu dienen, eine reproduzierbare Fertigungsqualität sicherzustellen, wobei der Rolliervorgang während eines zwischen der Startrollierposition und der Endrollierposition verlaufenden einzigen Verfahrwegs erfolgt. In einem darauf folgenden Verfahrensschritt 140 wird die Lanze 12 schnell aus der Bohrung herausgezogen, wenn die Lanze 12 die zuvor bestimmte Endrollierposition erreicht, wobei die Rotation gestoppt und der Kühlmitteldruck für den Kühlmittelzufuhrkanal der Lanze abrupt abgebaut werden.

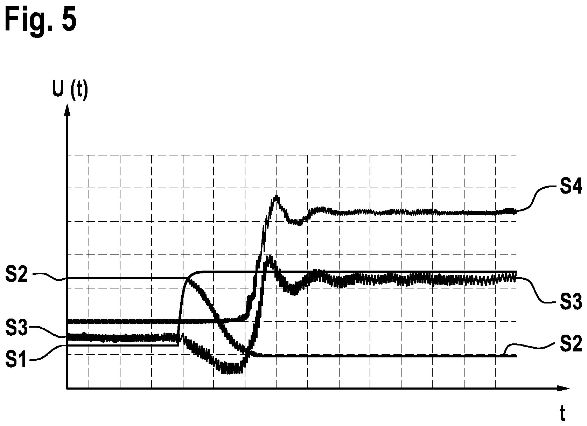

Fig. 5 zeigt ein Oszillogramm, in dem zeitliche Signalverläufe von unterschiedlichen Signalen S1, S2, S3, S4 aufgezeichnet sind, die Prozessparametern zugeordnet sind. Dabei sind mit dem Signal S1 die Soll-Drehzahl einer Antriebsspindel und der von ihr angetriebenen Lanze 12, mit dem Signal S2 die Ist-Drehzahl, mit dem Signal S3 der Ist-Druck eines am Ort einer den Kühlmitteldruck erzeugenden Pumpe positionierten Drucksensors und mit dem Signal S4 der Ist-Druck eines in der Nähe des in Bearbeitung befindlichen Bauteils positionierten Drucksensors in Abhängigkeit von der Zeit t entlang der Abszissenachse bezeichnet, während entlang der Ordinatenachse die als jeweilige Spannung U(t) gemessene Signalhöhe aufgetragen ist. Die dem Oszillogramm zugrundeliegende Zeiteinstellung ist so gewählt, dass die darin aufgezeichneten Signalverläufe die ersten drei Verfahrensphasen 110, 120, 130 des erfindungsgemäßen Verfahrens 100 erfassen bzw. überstreichen. So beginnt das Soll-Drehsignal S1 während der ersten Verfahrensphase 110 mit einem zunächst konstanten Verlauf, der einem Nullpegel entspricht, worauf in der zweiten Verfahrensphase 120 aufgrund einer mittels der vordefinierten Rampe programmgesteuerten Triggerung das Soll-Drehsignal S1 mit einer steilen Anstiegsflanke auf ein Plateau umspringt, das der vorbestimmten Enddrehzahl entspricht; in Reaktion darauf ändert sich praktisch zeitgleich der Signalverlauf des Ist-Drehsignals S2 von einem zuvor konstanten Nullpegel mit einer dem Antwortverhalten entsprechenden flach verlaufenden Flanke auf ein Plateau, das der vorbestimmten Enddrehzahl der Antriebsspindel und der von ihr angetriebenen Lanze 12 entspricht. Der gegenüber S1 invertierte Signalverlauf von S2 ist darauf zurückzuführen, dass das Ist-Drehsignal S2 für eine dem Soll-Drehsignal entgegengesetzte Rotationsrichtung aufgezeichnet ist. Ebenfalls in Reaktion auf die die zweite Verfahrensphase 120 einleitende Triggerung ändern sich die den Kühlmitteldruck erfassenden Ist-Drucksignale S3, S4 von einem ursprünglichen Nullpegel, um sich dann nach einem durch die Rampe vermittelten steilen Anstieg und einem unmittelbar darauf folgenden kurzen Einschwingen aufgrund von Regelschwingungen auf ein relativ konstantes Niveau einzustellen, das dem vorbestimmten Kühlmittelenddruck entspricht und mithin die dritte Verfahrensphase 130 kennzeichnet, in welcher der eigentliche Rolliervorgang ausgeführt wird. Die unterschiedlich steilen Übergänge bzw. Flanken in den beiden Signalen S3, S4 sind darauf zurückzuführen, dass die zugeordneten Drucksensoren an zwei unterschiedlichen Positionen den jeweils herrschenden Druck des Kühlmittels erfassen.

## Patentansprüche

1. Verfahren zum Betreiben einer Werkzeugvorrichtung zum Rollieren einer Bauteil-Bohrung, wobei die Werkzeugvorrichtung einen Schaft zur Kopplung an einen Drehantrieb einer Werkzeugmaschine und eine Lanze aufweist, weiche wenigstens einen Rollierkörper aufweist, und wobei die Lanze (12) an ihrem Außenumfang eine Vielzahl von Kugeln (18) als Rollierkörper aufweist, welche in axialer Erstreckung und in Umfangsrichtung der Lanze (12) verteilt angeordnet sind, **gekennzeichnet durch** die folgenden Verfahrensschritte:
a) Schnelles Eintauchen (110) der Lanze (12) in die Bohrung bis zu einer vorbestimmten ersten Axialposition, die in Eintauchrichtung vor einem unteren Ende eines zur Bearbeitung vorgesehenen Bohrungsabschnitts liegt, wobei das Eintauchen rotationslos und mit im Außenumfang der Lanze (12) versenkten Kugeln (18) erfolgt,
b) Durchfahren (120) eines zwischen der vorbestimmten ersten Axialposition und dem unteren Ende des zur Bearbeitung vorgesehenen Bohrungsabschnitts verbleibenden Axialwegs, wobei während des Durchfahrens die anfangs rotationslose Lanze (12) auf eine vorbestimmte Drehzahl in Rotation versetzt wird und zugleich die Kugeln (18) der Lanze (12) in ihre Rollierstellung radial ausgelenkt werden,
c) Rollierendes Zurückfahren (130) der Lanze (12) entgegen der Eintauchrichtung von dem eine Startrollierposition definierenden unteren Ende des Bohrungsabschnitts bis zu seinem eine Endrollierposition definierenden oberen Ende, wobei die gemäß Schritt b) erreichte Drehzahl der Lanze (12) etwa beibehalten wird und die Kugeln (18) in ihrer Rollierstellung radial ausgelenkt bleiben, und
d) Schnelles Herausführen (140) der Lanze (12) aus der Bohrung, wobei die Lanze (12) rotationslos gestellt wird und deren Kugeln (18) im Außenumfang der Lanze (12) versenkt werden.

2. Verfahren nach Anspruch 1, **dadurch gekennzeichnet, dass** für Schritt b) eine Rampenfunktion definiert wird, durch die ein zeitlich kontinuierlich zunehmender Verlauf zumindest für den Kühlmitteldruck im Kühlmittelkanal der Werkzeugvorrichtung (10) und die an der Lanze (12) eingestellte Drehzahl als Prozessparameter vorgegeben wird.

3. Verfahren nach Anspruch 2, **dadurch gekennzeichnet, dass** als weitere(r) Prozessparameter ein Kühlmitteldurchfluss und/oder eine auf die Lanze (12) einwirkende Vorschubkraft vorgesehen wird/werden, für den/die eine Rampenfunktion definiert wird.

4. Verfahren nach Anspruch 3, **dadurch gekennzeichnet, dass** in Schritt c) die Prozessparameter laufend gemessen und überwacht werden.

5. Verfahren nach einem der vorherigen Ansprüche, **dadurch gekennzeichnet, dass** die radiale Auslenkung und Versenkung der Kugeln (18) der Lanze (12) durch Steuern des Kühlmitteldrucks und/oder Kühlmitteldurchflusses im Kühlmittelzuleitungskanal der Werkzeugvorrichtung (10) bewirkt wird.

6. Verfahren nach einem der vorherigen Ansprüche, **dadurch gekennzeichnet, dass** die für Schritt a) vorbestimmte erste Axialposition in der Größenordnung von Millimetern, vorzugsweise 3.5 mm, in Eintauchrichtung vor der Startrollierposition liegt.

7. Verfahren nach einem der Ansprüche 2 bis 6, **dadurch gekennzeichnet, dass** bei Erreichen eines Gipfelpunktes der Rampenfunktion an der Startrollierposition die Translationsrichtung der Lanze (12) instantan reversiert wird.

## Claims

1. Method for operating a tool device for roller-burnishing a component bore, wherein the tool device has a shank for coupling to a rotary drive of a power tool and a lance which has at least one roller-burnishing body, and wherein the lance (12) has, on its outer circumference, a multiplicity of balls (18) as roller-burnishing bodies, which are arranged in a distributed manner along the axial extent and in the circumferential direction of the lance (12), **characterized by** the following method steps:
a) rapidly inserting (110) the lance (12) into the bore as far as a predetermined first axial position, which is located, in the insertion direction, in front of a bottom end of a bore portion intended for machining, wherein the insertion takes place in a rotation-free manner and with the balls (18) recessed into the outer circumference of the lance (12),
b) passing (120) along an axial path remaining between the predetermined first axial position and the bottom end of the bore portion intended for machining, wherein, during the passage, the initially rotation-free lance (12) is set in rotation at a predetermined rotational speed and at the same time the balls (18) of the lance (12) are deflected radially into their roller-burnishing position,
c) retracting (130) the lance (12), effecting roller-burnishing, counter to the insertion direction from the bottom end, defining an initial roller-burnishing position, of the bore portion to its upper end defining a final roller-burnishing position, wherein the rotational speed, reached in step b), of the lance (12) is more or less maintained and the balls (18) remain deflected radially in their roller-burnishing position,
d) rapidly removing (140) the lance (12) from the bore, wherein the lance (12) is set into a rotation-free state and its balls (18) are recessed into the outer circumference of the lance (12).

2. Method according to Claim 1, **characterized in that**, for step b), a ramp function is defined, by which a temporally continuously increasing profile is predefined at least for the coolant pressure in the coolant duct of the tool device (10) and the rotational speed set at the lance (12) as process parameters.

3. Method according to Claim 2, **characterized in that**, as further process parameter(s), a coolant flow rate and/or a feed force acting on the lance (12) is/are provided, for which a ramp function is defined.

4. Method according to Claim 3, **characterized in that**, in step c), the process parameters are measured and monitored continuously.

5. Method according to one of the preceding claims, **characterized in that** the radial deflection and recessing of the balls (18) of the lance (12) are effected by controlling the coolant pressure and/or coolant flow rate in the coolant feed duct of the tool device (10).

6. Method according to one of the preceding claims, **characterized in that** the first axial position predetermined for step a) lies in the order of millimetres, preferably 3.5 mm, in front of the initial roller-burnishing position in the insertion direction.

7. Method according to one of Claims 2 to 6, **characterized in that**, when a peak of the ramp function is reached at the initial roller-burnishing position, the direction of translation of the lance (12) is instantaneously reversed.

## Revendications

1. Procédé permettant de faire fonctionner un dispositif d'outillage destiné au roulage d'un trou d'une pièce, le dispositif d'outillage présentant une queue pour le couplage avec un entraînement rotatif d'une machine-outil et une lance qui présente au moins un corps roulant, et la lance (12) présentant sur sa circonférence extérieure une pluralité de billes (18) servant de corps roulants et qui sont réparties sur l'étendue axiale et dans la direction circonférentielle de la lance (12),
**caractérisé par** les étapes de procédé suivantes consistant à :
a) enfoncer rapidement (110) la lance (12) dans le trou jusqu'à une première position axiale prédéterminée qui se trouve dans la direction d'enfoncement avant d'une extrémité inférieure d'une partie de trou prévue pour l'usinage, l'enfoncement ayant lieu sans rotation et les billes (18) étant noyées dans la circonférence extérieure de la lance (12),
b) parcourir (120) un chemin axial restant entre la première position axiale prédéterminée et l'extrémité inférieure de la partie de trou prévue pour l'usinage, dans lequel, pendant le parcours, la lance (12) initialement sans rotation est mise en rotation à une vitesse de rotation prédéterminée, et en même temps, les billes (18) de la lance (12) sont déviées radialement dans leur position de roulage,
c) rétracter en roulant (130) la lance (12) à l'opposé de la direction d'enfoncement de ladite une extrémité inférieure définissant une position de roulage de départ de la partie de trou jusqu'à une extrémité supérieure définissant une position de roulage finale, la vitesse de rotation de la lance (12), atteinte selon l'étape b), étant maintenue et les billes (18) restant radialement déviées dans leur position de roulage, et
d) sortir rapidement (140) la lance (12) du trou, la lance (12) étant mise hors rotation et ses billes (18) étant noyées dans la circonférence extérieure de la lance (12).

2. Procédé selon la revendication 1, **caractérisé en ce que** pour l'étape b), une fonction de rampe est définie qui spécifie comme paramètres de processus un tracé augmentant constamment dans le temps au moins pour la pression de produit réfrigérant dans le canal de produit réfrigérant du dispositif d'outillage (10) et la vitesse de rotation réglée au niveau de la lance (12) .

3. Procédé selon la revendication 2, **caractérisé en ce que** comme autre(s) paramètre(s) de processus, un débit de produit réfrigérant et/ou une force d'avance agissant sur la lance (12) sont prévus pour lesquels une fonction de rampe est définie.

4. Procédé selon la revendication 3, **caractérisé en ce qu'**à l'étape c), les paramètres de processus sont mesurés et surveillés en continu.

5. Procédé selon l'une quelconque des revendications précédentes, **caractérisé en ce que** la déviation radiale et la noyure des billes (18) de la lance (12) sont provoquées par la commande de la pression de produit réfrigérant et/ou du débit de produit réfrigérant dans le canal d'amenée de produit réfrigérant du dispositif d'outillage (10).

6. Procédé selon l'une quelconque des revendications précédentes, **caractérisé en ce que** la première position axiale prédéterminée pour l'étape a) présente un ordre de grandeur du millimètre, mesurant de préférence 3,5 mm, dans la direction d'enfoncement de la position de roulage de départ.

7. Procédé selon l'une quelconque des revendications 2 à 6, **caractérisé en ce que** lorsqu'un point culminant de la fonction de rampe est atteint, la direction de translation de la lance (12) est inversée instantanément à la position de roulage de départ.
